# EUROPEAN PATENT APPLICATION

(11) **EP 4 563 953 A2**
(43) Date of publication of application: **04.06.2025**
(21) Application number: 24213343.7
(22) Date of filing: 15.11.2024
(51) Int. Cl.: G01G 19/414

(54) **FOOD PRODUCT SCALE**

(30) Priority: 30.11.2023 US 202363604562 P; 30.09.2024 US 202418902126
(71) Applicant: Illinois Tool Works Inc., Glenview IL 60025 (US)
(72) Inventor: BUHLER, Cherie, Glenview, 60025 (US); CAMPBELL, Sheila, Glenview, 60025 (US); BLANKLEY Jr., Randy L., Glenview, 60025 (US); PEVOAR, Lawrence A., Glenview, 60025 (US); CLINTON, Evan, Glenview, 60025 (US); HIGHLEY, James E., Glenview, 60025 (US)
(74) Representative: HGF

(57) **Abstract**

A scale includes a weigh station for receiving items to be weighed, an operator interface configured to display information associated with scale operations, the operator interface comprising a touch-screen display, and a controller operably coupled to the operator interface to effect display of information thereon, the controller configured such that a home interface screen view is displayed on the operator interface. The home interface screen view includes one or more selectable regions that enable the operator to identify to the controller an item to be weighed. The home interface screen view includes no more than two pricing and labeling operation fields. In implementations, the controller is configured such that, upon operator identification of the item to be weighed via one of the one or more selectable regions, the controller effects display of an identified item screen interface view that includes at least five pricing and labeling operation fields.

## Description

### TECHNICAL FIELD

This application relates generally to scales used for weighing food product in supermarkets, groceries and other stores, and, more particularly, to a scale including advantageous interface configurations and functionality.

### BACKGROUND

In typical commercial food product scale applications the scale is used to weigh food products and determines prices for the food products, and an associated printer prints a label for application to the food product. An operator enters a product number, such as a PLU (price look-up) number, for the product being weighed and the scale accesses its database, or accesses a remote database, for pricing information on the product. The total price for the item is then determined based upon its weight.

U.S. Patent No. 9,377,345 discloses an advantageous scale configuration. However, improvements are continually sought. For example, referring to Fig. 7 of U.S. Patent No. 9,377,345, a home interface screen view is shown at which the operator can identify to the scale controller the item to be weighed, priced and labeled, and this home screen include numerous pricing and labeling operation fields (definition provided below) that make the home interface screen overly busy. As shown in Fig. 8 of U.S. Patent No. 9,377,345, those pricing and labeling operation fields are populated once the item being weighed is identified to the controller. This functional operation of the scale is less effective and complicated for some operators.

### SUMMARY

In one aspect, a scale includes a weigh station for receiving items to be weighed, an operator interface configured to display information associated with scale operations, the operator interface comprising a touch-screen display, and a controller operably coupled to the operator interface to effect display of information thereon, the controller configured such that a home interface screen view is displayed on the operator interface. The home interface screen view includes one or more selectable regions that enable the operator to identify to the controller an item to be weighed. The home interface screen view includes no more than two pricing and labeling operation fields.

In one implementation of the foregoing aspect, the controller is configured such that, upon operator identification of the item to be weighed via one of the one or more selectable regions, the controller effects display of an identified item screen interface view that includes at least five pricing and labeling operation fields.

In implementations, the identified item screen interface view includes at least six pricing and labeling operation fields (e.g., at least seven, or at least eight, at least nine or at least ten).

In another aspect, a scale includes a weigh station for receiving items to be weighed, an operator interface configured to display information associated with scale operations, the operator interface comprising a touch-screen display and a controller operably coupled to the operator interface to effect display of information thereon, the controller configured such that: a home interface screen view is displayed on the operator interface; wherein the home interface screen view includes multiple fields, including one or more selectable regions that enable the operator to identify to the controller an item to be weighed; and upon operator identification of the item to be weighed via one of the one or more selectable regions, the controller effects display of an identified item screen interface view that that has multiple fields that are different than the multiple fields of the home interface screen view.

The details of one or more embodiments are set forth in the accompanying drawings and the description below. Other features, objects, and advantages will be apparent from the description and drawings, and from the claims.

### BRIEF DESCRIPTION OF THE DRAWINGS

- Fig. 1: is a front perspective view of one embodiment of a scale;
- Fig. 2: a rear perspective view of the scale of Fig. 1;
- Fig. 3: is a schematic depiction of the scale;
- Fig. 4: shows an exemplary home interface screen view of the scale; and
- Fig. 5: shows an exemplary identified item interface screen view of the scale.

### DETAILED DESCRIPTION

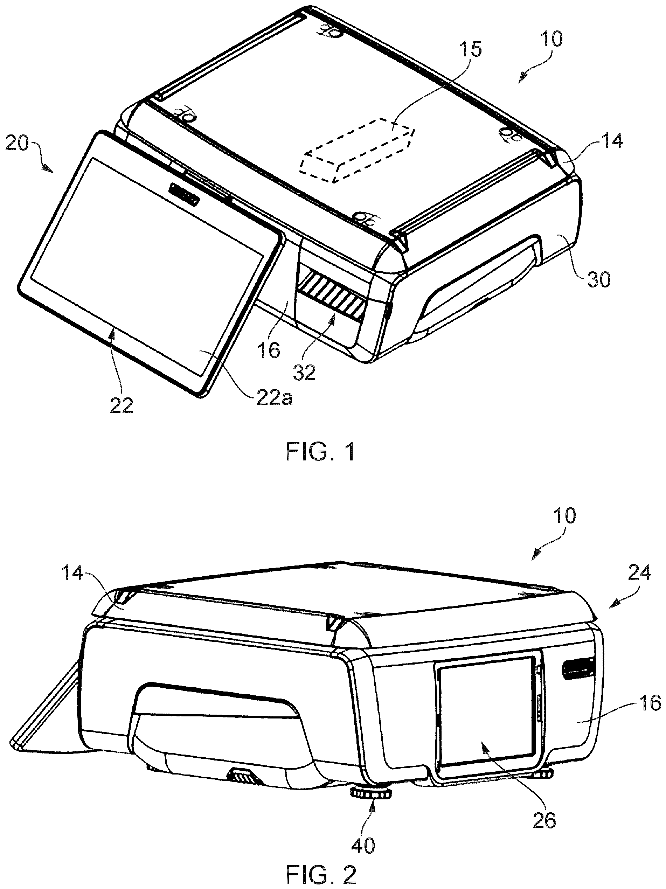

Referring to Figs. 1-3, an exemplary scale configuration is shown. The scale 10 includes a weighing station 12, which in some embodiments may be formed by a weighing platter 14 that can be removed (e.g., for cleaning) from atop the scale housing 16, and having an associated mechanism such as a load cell 15 located internal of the scale housing 16, for producing weight indicative signals when items are placed on the weighing station. An operator interface side 20 of the scale includes an operator interface 22 configured to display information associated with scale operations. By way of example, the operator interface 22 may be formed by a touch-screen display 22a. A customer interface side 24 of the scale includes a customer interface 26, which in certain embodiments may be formed by any suitable display screen technology. It is contemplated that the customer interface 26 need not include touch-screen capabilities, but it is recognized that in certain embodiments touch-screen capability could be incorporated into the customer interface as well. The scale housing includes a label exit slot 32 and incorporates a label printer therein along with a label supply station. The label printer may use any suitable printing technology. A removable side cassette 30 provides to access the label supply station for replacement of the labels and to access the label printer and the label path for maintenance. Adjustable support feet 40 are provided for scale leveling.

In one example of a typical item pricing operation an operator enters an item identifier (e.g., a price look-up number or PLU) via the operator interface, and the scale retrieves price and other product information associated with the PLU and displays product information. The operator places the item (e.g., just sliced by the operator or selected from a container within the deli counter or elsewhere, or in the case of self service selected from a food display or stand) on the weighing station, and the scale prices the item based upon weight and displays that price on both the operator interface and the customer interface. When the desired amount of the product is achieved, the operator presses a print button on the operator interface and the scale prints a label with item details (e.g., item name, item weight, item price) that is then applied to a package in which the item is placed before the package is handed to a customer. In another example, which is more common in a bakery department, the scale 10 may price an item by an item count entered by the operator (e.g., in the case of an item with a PLU that indicates a price based upon item count).

As used herein, the term "operator" refers broadly to any person interacting with the user interface of the scale. Thus, the term "operator" includes, for example, each of (i) regular store employees that may have access to basic scale functions/operations, (ii) supervisor type store employees that may have access to basic scale functions/operations and more advanced scale functions/operations, (iii) service personnel that may have access to special service-based scale functions/operations and (iv) store customers (e.g., where a scale is set-up for operation in a self service mode). When the term "operator" is used in the claims, and unless otherwise dictated by other express limitations of the claim, the term should be construed broadly enough to encompass one or more of the foregoing exemplary operator types. However, when the term "operator" is used in the claims, and unless otherwise dictated by other express limitations of the claim, the term should not be construed as requiring applicability to more than one of the exemplary operator types.

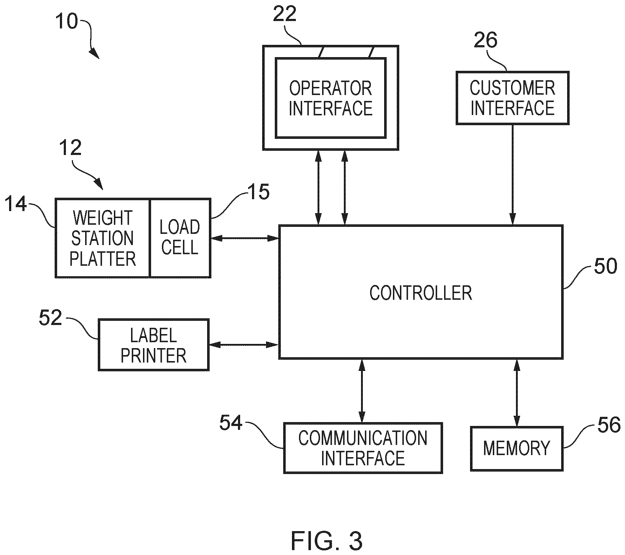

Referring now to Fig. 3, a high level schematic depiction of the scale 10 is shown, including a controller 50 interconnected with each of the operator interface 22, customer interface 26, weighing station 12, label printer 52 and a communications interface 54, and having associated memory 56. The controller 50 may, for example, be any suitable processor-based controller, including one or more processors, such as a dual-core processor, with associated hardware, software and firmware to achieve desired functionality. As used herein, the term "controller" is intended to broadly encompass the collection of circuits, processors, software, firmware and/or other components that carry out the various operating and processing functions of the scale and its component parts as described herein. The weight station platter 14 is operatively connected to a load cell 15, which produces weight indicative signals. The communication interface 54 may be any suitable type (e.g., as a hardware link, such as a standard network connector, or may be formed by a wireless device such as an RF or infrared transceiver), and it is recognized that multiple communications interfaces may be provided. Memory 56 may, by way of example, take the form of one or more of non-volatile flash memory and/or random access memory, or disk on module or micro-SD. As explained above, the controller 50 is operable to establish a price for a weighed item based in part upon a weight indicative signal produced for that item. In this regard, the scale controller may include its own database of product price information (e.g., price per pound) that it retrieves when the operator inputs the PLU number or other product identifier of an item being weighed. Alternatively, in certain embodiments, the controller may utilize the communication interface 54 to access a remote computer system having the database of product price information on other product information. Although not shown in Fig. 3, in certain embodiments the scale may also include an RF operator identification system in which operators utilize RF identification units (e.g., in the form of wrist-band type units, or other structures) that are worn proximate to the hands of the operator.

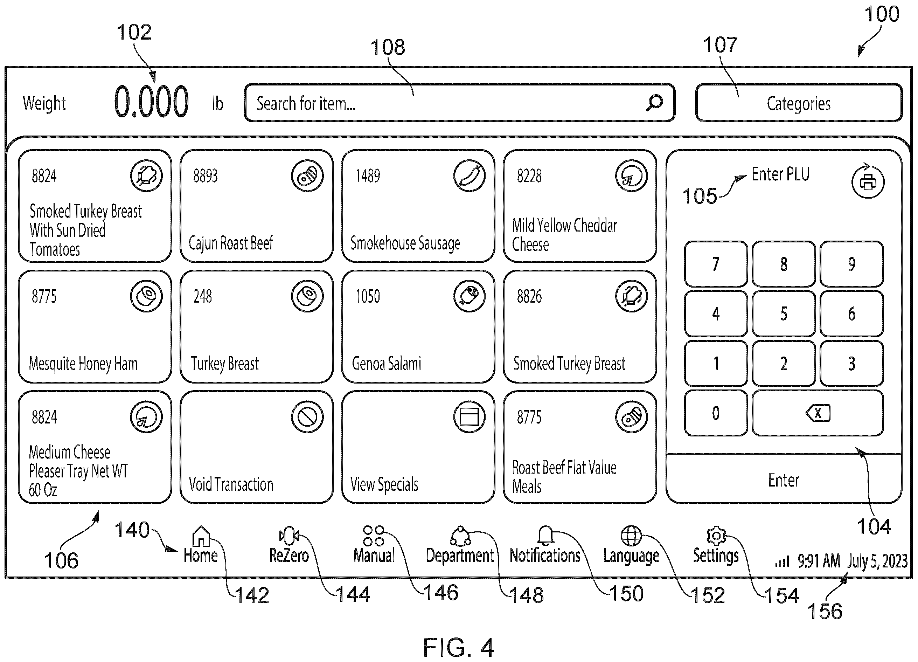

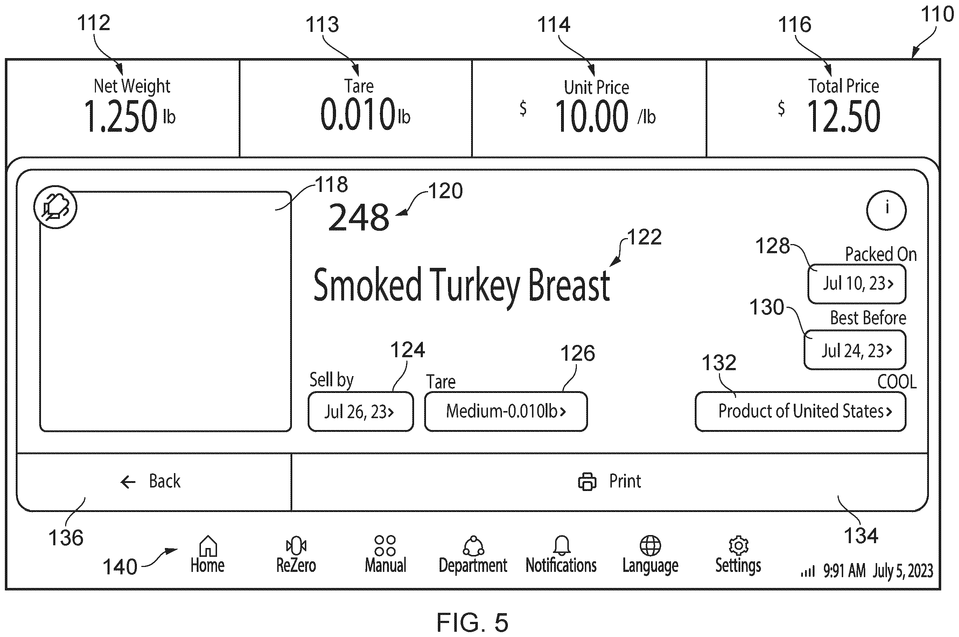

Referring to Fig. 4, a functionally advantageous home screen interface view 100 for operator use is shown. Notably, this home screen interface view 100 does not include a large number of display fields that can be used to display product data for a product that is being weighed. Here, the only field that is related to a product being weighed is the Weight field 102. This field 102 will update based upon the weight of a food item on the scale platter 14, without identification of the product to the scale (e.g., where product identification can be achieved via the keypad section or region 104 of the interface view (resulting in display of the PLU in field 105), via selection of a specific product icon among the recently weighed or best seller product icon/flashkey display section 106, or via use of the item search field 108 to search for an item by name and then select a returned item). Once a product is identified to the scale, the operator display transitions to an identified item screen interface view 110 as per Fig. 5. Notably, the identified item screen interface view 106 includes numerous additional display fields that are used to display data for the product being weighed, such as a Net Weight field 112, a Tare weight display field 113, a Unit Price field 114, a Total Price field 116, a product image field 118, a product number field 120, a product name field 122, a selectable Sell by field 124, a selectable Tare container field 126, a selectable Packed On field 128, a selectable Best Before field 130 and a selectable country of original location (COOL) field 132. Below these product fields, a selectable print button 134 and a selectable Back button 136 are displayed. A swiping operation, discussed in U.S. Patent No. 9,377,345, could also be used by the operator to return to the home screen interface view.

In both the home screen interface view 100 and the identified item screen interface view 110, a fixed, common set of selectable icons or display fields 140 are provided. Here, those icons include a selectable Home icon 142 (returns the display to the home screen interface view), a selectable ReZero icon 144 for re-zeroing the scale, a selectable icon 146 (for choosing print mode (e.g., Manual or Automatic), a selectable Department icon 148 (for changing which department the scale is located in), a selectable Notifications icon 150 (for viewing error and warning history), a selectable Language icon 152 (for changing the display language), a selectable Settings icon 154 (for viewing and modifying scale settings) and a date and time display segment 156.

An advantage of the above-described configuration of the home screen interface view 100 is that the home screen is not excessively occupied by display fields that have no use before the product being weighed and labeled is identified to the scale. This simplifies the display from an operator use and scale function standpoint, making the home screen more intuitive for the operator and enabling a larger portion of the home screen to be used for purposes that are actually useful to the operator before the item to be weighed is identified by the scale (e.g., allowing a relatively large recently weighed or best seller display section 106).

Here the display section 106 makes up at least 35% of the total display area of the home screen interface view 100 (such as at least 40% of the total display area of the home screen interface view 100 or at least 45% of the total display area of the home screen interface view 100). Notably, in embodiments, the relatively large display section 106 could display other selectable fields, such as product category icons/flashkeys (which may be displayed on the home screen by selecting the categories button 107) or flashkeys that enable an operator to initiate some other functionality of the scale.

Moreover, by transitioning from the home screen interface view 100 to the identified item screen interface view 110, the operator is immediately taken to a view that focuses almost entirely on the item being weighed and the weigh process, without any excessive unrelated information being displayed. This allows the operator to focus on the task at hand, which is completion of the weigh, price and labeling of the identified item.

In embodiments, the home interface screen view 100 includes no more than two pricing and labeling operation fields. As used herein, the terminology "pricing and labeling operation field" means a field that displays (i) information regarding a product that will be or has been identified to the controller for weighing, pricing and labeling or (ii) information that will be printed on a label for a product being weighed, priced and labeled or (iii) a selectable label print field icon or button. For the avoidance of doubt, the terminology "pricing and labeling operation field" does not include a field or selectable button or region on the display that enables an operator to identify to the controller an item to be weighed, priced and labeled. Thus, referring to Fig. 4, the buttons of the keypad region 104, the PLU field 105, the selectable buttons/flashkeys in display section 106 and any of the selectable icons or display fields 140 are not pricing and labeling operation fields.

In the illustrated embodiment, the no more than two pricing and labeling operation fields of the home interface screen view 100 include the weight field 102. Here, the controller is configured such that, upon operator identification of the item to be weighed via one of the one or more selectable regions, the controller effects display of the identified item screen interface view 110 that includes at least five pricing and labeling operation fields. Here, the at least five pricing and labeling operation fields include the net weight field 112, the unit price field 114, the total price field 116, the product image field 118, the product name field 122, the selectable label print button 134, the sell by field 124, the tare field 113, the packed on field 128, the best before field 130 and the item location of origin field 132.

Notably, the identified item interface screen view 110 does not include the keypad region 104.

It is to be clearly understood that the above description is intended by way of illustration and example only, is not intended to be taken by way of limitation, and that other changes and modifications are possible.

## Claims

1. A scale, comprising:
a weigh station for receiving items to be weighed;
an operator interface configured to display information associated with scale operations, the operator interface comprising a touch-screen display;
a controller operably coupled to the operator interface to effect display of information thereon, the controller configured such that a home interface screen view is displayed on the operator interface;
wherein the home interface screen view includes one or more selectable regions that enable the operator to identify to the controller an item to be weighed;
wherein the home interface screen view includes no more than two pricing and labeling operation fields.

2. The scale of claim 1, wherein the no more than two pricing and labeling operation fields include a weight field.

3. The scale of claim 1, wherein the controller is configured such that, upon operator identification of the item to be weighed via one of the one or more selectable regions, the controller effects display of an identified item screen interface view that includes at least five pricing and labeling operation fields.

4. The scale of claim 3, wherein the at least five pricing and labeling operation fields include a net weight field, a unit price field, a total price field, a product image and/or product name field and a selectable label print button.

5. The scale of claim 4, wherein the at least five pricing and labeling operation fields further include at least two of a tare weight field, a sell by field, a tare container field, a packed on field, a best before field or an item location of origin field.

6. The scale of claim 3, wherein the one or more selectable regions that enable the operator to identify to the controller an item to be weighed includes a keypad region display numeric buttons, and the identified item interface screen view does not include the keypad region.

7. A scale, comprising:
a weigh station for receiving items to be weighed;
an operator interface configured to display information associated with scale operations, the operator interface comprising a touch-screen display;
a controller operably coupled to the operator interface to effect display of information thereon, the controller configured such that:
a home interface screen view is displayed on the operator interface; wherein the home interface screen view includes multiple fields, including one or more selectable regions that enable the operator to identify to the controller an item to be weighed;
upon operator identification of the item to be weighed via one of the one or more selectable regions, the controller effects display of an identified item screen interface view that that has multiple fields that are different than the multiple fields of the home interface screen view.

8. The scale of claim 7, wherein:
the multiple fields of the home interface screen view include no more than two pricing and labeling operation fields;
the multiple fields of the identified item screen interface view include at least five pricing and labeling operation fields.
